(19) Europäisches Patentamt
European Patent Office
Office européen des brevets

(11) Veröffentlichungsnummer: **0 014 673**
**B1**

(12) # EUROPÄISCHE PATENTSCHRIFT

(45) Veröffentlichungstag der Patentschrift: **22.12.82**

(21) Anmeldenummer: **80810019.2**

(22) Anmeldetag: **24.01.80**

(51) Int. Cl.³: **C 08 F 8/14,** C 08 G 8/28, C 08 G 59/16, C 08 G 65/32, C 08 F 20/30, C 08 F 16/22

(54) **Durch Licht vernetzbare Polymere mit seitenständigen, sich vom Indenon ableitenden Gruppen, Herstellung und Verwendung derselben.**

(30) Priorität: **30.01.79 CH 886/79**

(43) Veröffentlichungstag der Anmeldung: **20.08.80 Patentblatt 80/17**

(45) Bekanntmachung des Hinweises auf die Patenterteilung: **22.12.82 Patentblatt 82/51**

(84) Benannte Vertragsstaaten: **CH DE FR GB**

(56) Entgegenhaltungen:
**FR-A-2 219 954**
**FR-A-2 261 289**

(73) Patentinhaber: **CIBA-GEIGY AG, Patentabteilung Postfach, CH-4002 Basel (CH)**

(72) Erfinder: **Zweifel, Hans, Dr., Lothringerstrasse 93, CH-4056 Basel (CH)**
Erfinder: **Berger, Joseph, Dr., Rte des Préalpes 4, CH-1723 Marly (CH)**
Erfinder: **Bosshard, Hans, Hohe Winde-Strasse 23, CH-4059 Basel (CH)**

**EP 0 014 673 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

# Durch Licht vernetzbare Polymere mit seitenständigen, sich vom Indenon ableitenden Gruppen, Herstellung und Verwendung derselben

Die vorliegende Erfindung betrifft neue unter der Einwirkung von Licht vernetzbare Polymere mit seitenständigen Halogen-indenoncarbonsäuregruppen, Verfahren zu deren Herstellung und deren Verwendung zur Vernetzung unter der Einwirkung von Licht, besonders zum Erzeugen von Abbildungen.

Lichtempfindliche Polymere auf der Basis von Halogen-indenoncarbonsäuren waren bisher nicht bekannt und auch eine entsprechende Lichtempfindlichkeit dieser Säure selbst ist nicht beschrieben. Es ist jedoch bereits eine ganze Reihe von andersartigen durch Lichteinwirkung vernetzbaren Polymeren bekannt, bei denen die Vernetzung durch eine Photocyclodimerisierung von spezifischen C=C-Doppelbindungen bewirkt wird. Als Stand der Technik, welcher sowohl derartige lichtempfindliche Polymere als auch entsprechende lichtempfindliche Monomere, welche für die Herstellung von solchen Polymeren geeignet sind, umfasst, sind die folgenden Patentanmeldungen bzw. Patente anzuführen:

Die japanischen Offenlegungsschriften:

JA 49-128991, JA 49-128992, JA 49-128993, JA 50-5376, JA 50-5377, JA 50-5378, JA 50-5379, JA 50-5380, JA 50-9682, JA 50-10884, JA 50-77363.

Die Deutschen Offenlegungsschriften:

DE 2 031 573, DE 2 032 037, DE 2 626 795, DE 2 407 033.

Das US-Patent 4 079 041.

Bei diesen bekannten lichtempfindlichen Polymeren handelt es sich mit Ausnahme von denen gemäss DE 2 407 033 um Substanzen, bei denen die Lichtempfindlichkeit auf Maleinimidgruppen oder Abkömmlingen davon beruht. Dagegen beruht die Lichtempfindlichkeit der Polymeren nach DE 2 407 033 auf substituierten 1-Carbonyloxy-1H-naphthalin-2-on-Gruppen.

Die vorbekannten vernetzbaren Polymeren haben den Nachteil einer relativ geringen photochemischen Empfindlichkeit, weshalb sie sich nicht oder nur schlecht für zahlreiche Anwendungen eignen, für die hochlichtempfindliche Substanzen benötigt werden, oder aber sie erfordern die Mitverwendung von bekannten Photosensibilisatoren, wie Benzophenon, Thioxanthon und dergleichen. Im übrigen sind dieselben farblos. Häufig ist es aber aus technischen Gründen erwünscht, dass das lichtempfindliche Material eine spezifische Farbe aufweist. Bei den bekannten Polymeren wird dann eine aufwendige Einfärbung erforderlich, die manchmal auch noch zu Störungen führt.

Aufgabe der Erfindung ist daher die Bereitstellung von neuen unter der Einwirkung von Licht vernetzbaren Polymeren, die eine hohe UV-Absorption im langwelligen Bereich aufweisen und deswegen auch ohne Zusatz von Photosensibilisatoren eine hohe Vernetzungsgeschwindigkeit gewährleisten. Ausserdem sollen diese Polymeren eine ganz spezifische Eigenfärbung aufweisen, welche bei den lichtempfindlichen Polymeren des Standes der Technik nicht auftritt.

Gegenstand der Erfindung ist ein unter der Einwirkung von Licht vernetzbares Polymer, dessen Durchschnittsmolekulargewicht mindestens 1000 beträgt und das seitenständige Gruppen der Formel I

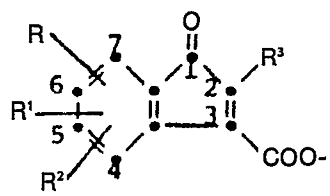

(I)

aufweist, worin

$R^3$ für Cl oder Br, vorzugsweise für Cl, steht und R, $R^1$ und

$R^2$ gleich oder verschieden sind,

R einen n-Alkylrest mit 1 bis 4 C-Atomen, vorzugsweise $CH_3$, oder aber H, Cl, Br oder F,

$R^1$ einen n-Alkylrest mit 1 bis 4 C-Atomen, vorzugsweise $CH_3$, oder aber H,

$R^2$ H oder $CH_3$ oder aber

$R^1$ und $R^2$ zusammen die Gruppe $-CH_2CH_2CH_2-$ bedeuten, mit der Massgabe, dass im letzteren Fall die Bindung an den Sechsring über die C-Atome in 5- und 6-Position des Kerns erfolgt, wobei der Anteil an Gruppen der Formel I 5 bis 100%, bevorzugt 20 bis 100%, bezogen auf die Anzahl der wiederkehrenden Strukturelemente des jeweiligen Polymeren, beträgt.

Bei den erfindungsgemässen Polymeren handelt es sich z. B. um solche aus der Gruppe der Phenol-Formaldehyd-Harze, der Novolake, der Phenoxy-Harze und solche, welche durch Homo- oder Copolymerisation von C=C-Doppelbindungen enthaltenden Monomeren erhalten werden.

Die erfindungsgemässen Polymeren lassen sich nach an sich bekannten Synthesemethoden zur Herstellung von Makromolekülen mit photoaktiven seitenständigen Gruppen herstellen. Grundsätzlich kommen folgende Wege in Betracht:

1. Einbau der Gruppen der Formel I in eine bestehende Polymerkette;

2. Aufbau der Polymerkette aus Monomeren, welche die lichtempfindliche Gruppe der Formel I bereits enthalten, wobei dieser Kettenaufbau vorzugsweise durch eine Polymerisation über C=C-Doppelbindungen erfolgt.

Bei dem 1. Herstellungsweg wird stets in Gegenwart von inerten Lösungsmitteln gearbeitet. Bei der 2. Methode wird entweder in Block oder in Gegenwart von inerten Lösungsmitteln polymerisiert. Da beide Verfahren nach an sich bekannten Grundmethoden durchgeführt werden, erübrigen sich hier weitere Angaben über die gegebenenfalls zu verwendenden Lösungsmittel, Katalysatoren und Temperaturen. Derartige Grundmethoden sind im übrigen ausführlich in dem US-Patent 4 079 041 beschrieben. Zu diesem Zusammenhang ist auch auf die grundlegenden Hand- bzw. Lehrbücher über die Techniken der verschiedenen Polymerisat-Herstellungen hinzuweisen; so beispielsweise auf das «Kunststoff-Handbuch» von R. Vieweg et al, Carl Hanser Verlag, München 1968 bis 1975, insbesondere auf die Bände I, IV, IX, X und XI und auf «High Polymers» von Carothers et al, Bände I bis XXVI, Interscience Publishers, New York 1956-1972.

Weiter ist auch das folgende Handbuch anzuführen: Houben-Weyl «Methoden der organischen Chemie», Band XIV/1 (Makromolekulare Stoffe, Teil 1) Georg-Thieme Verlag, Stuttgart 1962.

Teilweise können mit den Methoden 1 und 2 gleiche Produkte erhalten werden, so dass sich wahlweise die Methode 1 oder 2 anwenden lässt. Werden die Gruppen der Formel I in eine bereits vorhandene Polymerkette eingebaut, so erfolgt dieser Einbau beispielsweise durch eine Additionsreaktion unter gleichzeitiger Öffnung eines Ringsystems, z. B. einer Dicarbonsäureanhydridgruppe oder einer Epoxidgruppe.

Eine Vorzugsform der erfindungsgemässen Polymeren stellt ein solches Homo- oder Copolymerisat von reaktiver Doppelbindungen enthaltenden Monomeren dar, welches Durchschnittsmolekulargewichte zwischen 30 000 und 1 000 000 aufweist, und welches die Gruppen der Formel I in Molekülkettengliedern der Formeln II bis VI

|
CH-CO . OH
|
CH-CO . O-$(CH_2)_m$-E (II)
|

|
CH-CO . OH
|
CH-CO . O-$CH_2$-$CH_2$-(O-$CH_2$-$CH_2)_n$-E (III)
|

|
$CH_2$
|
$R^6$-C-CO . O-$(CH_2)_m$-E (IV)
|

|
$CH_2$ OH
| |
$R^6$-CH-CO . O-$CH_2$-CH-$CH_2$-E (V)
|

|
$CH_2$
|
CH-O-$CH_2$-$CH_2$-E (VI)
|

enthält, in denen der Rest E der Formel I entspricht, m eine Zahl von 2 bis 6, n eine Zahl von 1 bis 10 und $R^6$ H oder -$CH_3$ darstellen.

Dieses bevorzugte Polymer kann ausser einem oder mehreren der Strukturelemente der Formeln II bis VI gleichzeitig Strukturelemente der Formel IX

$X_1$ $X_2$
| |
—C—C— (IX)
| |
$X_3$ $X_4$

enthalten, worin

$X_1$ und $X_3$ je Wasserstoff, $X_2$ Wasserstoff, Chlor oder Methyl, $X_4$ Wasserstoff, Methyl, Chlor, -CN, -COOH, Phenyl, Methylphenyl, Methoxyphenyl, Cyclohexyl, -COO-Alkyl mit 1-12 C-Atomen im Alkylteil, -COO-Phenyl, -$COOCH_2CH$—$CH_2$ (über O verbrückt), -COO-Alkyl-OH mit 1-3 C-Atomen im Alkylteil, -OCO-Alkyl mit 1-4 C-Atomen im Alkyl, -OCO-Phenyl, -CO-Alkyl mit 1-3 C-Atomen im Alkyl, Alkoxy mit 1-6 C-Atomen oder Phenoxy oder $X_1$ und $X_2$ je Wasserstoff und $X_3$ und $X_4$ zusammen die Gruppierung -C(=O)-O-C(=O)- oder je -COOH oder -COOAlkyl mit 1-6 C-Atomen im Alkyl bedeuten.

Bevorzugt werden bei diesen speziellen Polymeren, solche, welche Strukturelemente der Formel IX enthalten, worin $X_1$ und $X_3$ je Wasserstoff, $X_2$ Wasserstoff oder Methyl und $X_4$ -$OCOCH_3$, -COOH oder -COOAlkyl mit 1-8 C-Atomen im Alkyl bedeuten oder worin $X_1$, $X_2$ und $X_3$ je Wasserstoff und $X_4$ -CN, Chlor oder Phenyl bedeuten.

Ein weiteres bevorzugtes Polymer gemäss dieser Erfindung ist ein solches auf der Ausgangsbasis Novolak, welches Strukturelemente der Formel X

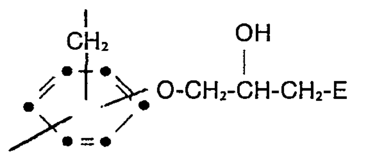
(X)

in der der Rest E der Formel I entspricht, aufweist. Die Durchschnittsmolekulargewichte liegen hier zwischen 1000 und 100 000.

Besonders bevorzugt sind Polymere, welche Molekülkettenglieder der Formeln XVII bis XXI aufweisen.

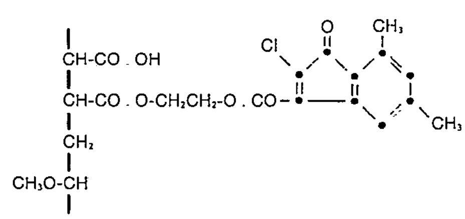
(XVII)

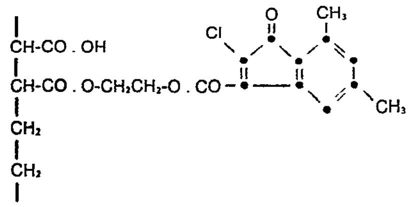

(XVIII)

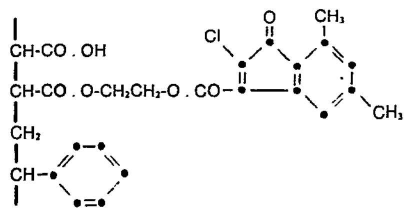

(XIX)

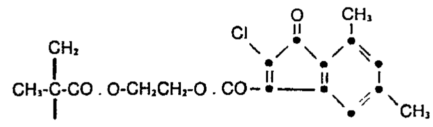

(XX)

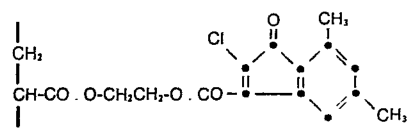

(XXI)

Ein Teil der erfindungsgemässen Polymeren mit Gruppen der Formel I kann dadurch hergestellt werden, dass man ein freie -OH-Gruppen enthaltendes Polymer, vorzugsweise ein Kunstharz vom Typ Novolak, Phenoxyharz oder Phenol-Formaldehyd-Harz, mit einer Verbindung der Formel XI

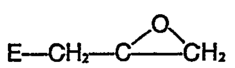

(XI)

in der E der Formel I entspricht, umsetzt.

Man kann aber auch in der Weise vorgehen, dass man ein anstelle der freien -OH-Gruppen Glyzidylgruppen enthaltendes Kunstharz, vorzugsweise vom Typ Novolak, Phenoxyharz oder Phenol-Formaldehyd-Harz, mit einer Halogenindenoncarbonsäure der Formel E-H, in der der Rest E die Gruppe der Formel I darstellt, umsetzt.

Nach beiden Arbeitsweisen lassen sich auch die bevorzugten Polymeren, welche Strukturelemente der Formel X aufweisen, darstellen.

Die Polymeren, welche die Gruppen der Formel I in Molekülkettengliedern der Formeln II oder III enthalten, kann man in der Weise herstellen, dass man ein Homopolymer oder ein Mischpolymer von Maleinsäureanhydrid, welche ein gegebenenfalls substituiertes Maleinsäureanhydrid einpolymerisiert enthalten, wobei die Anhydridgruppe ganz oder teilweise erhalten ist, mit einer der Verbindungen der Formeln XII und XIII

$E-(CH_2)_m-OH$ (XII)

$E-(CH_2-CH_2-O)_n-CH_2-CH_2-OH$ (XIII)

in denen m eine Zahl von 2 bis 6 und n eine Zahl von 1 bis 10 bedeuten, und in denen E der Formel I entspricht, umsetzt.

Bei der Herstellung dieser zuletzt beschriebenen oder ähnlicher Polymeren kann man aber auch in der Weise vorgehen, dass man in erster Reaktion Maleinsäureanhydrid, welches gegebenenfalls substituiert ist, mit einer der Verbindungen der Formeln (XII) oder (XIII) umsetzt, und in einer 2. Reaktion das jeweils erhaltene ungesättigte Monomer, gegebenenfalls zusammen mit anderen mindestens eine C=C-Doppelbindung aufweisenden Comonomeren polymerisiert.

Als Ausgangssubstanz für diese Polymeren wird vorzugsweise Maleinsäureanhydrid verwendet. Grundsätzlich lassen sich aber auch entsprechende Polymere herstellen, welche sich von substituierten Maleinsäureanhydriden ableiten. Dabei handelt es sich insbesondere und methylsubstituierte Maleinsäureanhydride. Geeignete Comonomere für Maleinsäureanhydrid sind beispielsweise Styrol, Vinyläther, Äthylen und Propylen.

Eine ganz besondere Vorzugsform der beiden zuletzt angeführten Herstellungsverfahren stellt ein solches Verfahren dar, bei dem als Verbindungen der Formeln XII solche Verbindungen eingesetzt werden, welche auch den Formeln XXII und XXIII entsprechen.

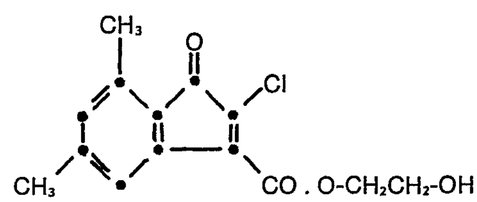

(XXII)

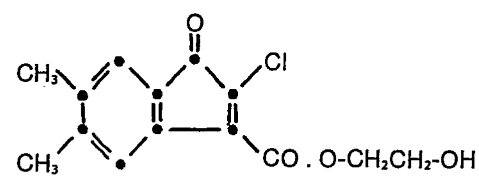

(XXIII)

Die Polymere, welche die Gruppen der Formel I in Molekülkettengliedern der Formeln IV bis VI enthalten, lassen sich in der Weise herstellen, dass man eine oder mehrere der Verbindungen der Formeln XIV bis XVI

$$CH_2=C(R^6)-CO.O-(CH_2)_m-E \quad (XIV)$$

$$CH_2=C(R^6)-CO.O-CH_2-CH(OH)-CH_2-E \quad (XV)$$

$$CH_2=CH-O-CH_2-CH_2-E \quad (XVI)$$

in denen $R^6$ H oder $CH_3$ darstellt und m und E dieselbe Bedeutung wie in Formel II haben, gegebenenfalls zusammen mit weiteren Comonomeren, polymerisiert.

Geeignete Comonomere für die Monomeren

der Formeln XIV bis XVI sind beispielsweise Acrylate und Methacrylate, welche nicht den Rest E enthalten, Styrol, Vinylverbindungen, wie Vinyläther, Vinylchlorid und Viniylacetat, Vinylidenchlorid.

Die Polymere mit Molekülkettengliedern der Formel IV lassen sich aber auch in der Weise herstellen, dass man ein Polyacrylsäure- oder ein Polymethacrylsäurechlorid oder ein entsprechendes Mischpolymer jeweils mit einem Ester der Formel $E-(CH_2)_m-OH$, in der E die Gruppe der Formel I darstellt und m eine Zahl von 2 bis 6 bedeutet, kondensiert. Unter Mischpolymeren sind hier solche zu verstehen, welche dieselben Comonomeren wie für die Monomeren der Formeln XIV bis XVI enthalten.

Die Polymere mit Molekülkettengliedern der Formel V können auch durch Umsetzen von Polyacrylsäureglycidylestern oder von Polymethacrylsäureglycidylestern oder von entsprechenden Mischpolymeren mit glycidylgruppen-freien Monomeren mit Halogenindenoncarbonsäuren der Formel E-H hergestellt werden.

Nach der jeweiligen beendeten Umsetzung kann das Polymer durch Eingiessen in geeignete organische Lösungsmittel, z. B. aliphatische Kohlenwasserstoffe, Alkohole oder Dialkyläther, wie n-Pentan, n-Hexan, Methanol, Äthanol und Diäthyläther, ausgefällt werden. Es liegt dann als orangegefärbtes Produkt vor.

Diejenigen Ausgangsprodukte für die Herstellung der erfindungsgemässen Polymeren, welche die charakteristische, für die Lichtempfindlichkeit massgebende Gruppe der Formel I enthalten, sind zum grössten Teil neu. Es handelt sich um Verbindungen der Formel a

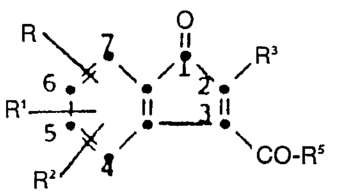
(a)

worin für alle angegebenen Reste R bis $R^3$ dasselbe wie bei der Definition der Formel I gilt und worin $R^5$ einen der Reste -OH, $-O-(CH_2)_m-OH$, $-O-(CH_2-CH_2-O)_n-CH_2-CH_2-OH$,

$-O-(CH_2)_m-O . CO . C{=}CH_2$,
|
$R^6$

$-O-CH_2-CH-CH_2-O . CO-C{=}CH_2$,
| |
OH $R^6$

$-O-CH_2-CH_2-O-CH{=}CH_2$ und $-O-CH_2-CH$—$CH_2$ (mit O-Brücke zwischen CH und $CH_2$)

bedeutet,

wobei m eine Zahl von 2 bis 6, n eine Zahl von 1 bis 10, und $R^6$ H oder $-CH_3$ darstellen, mit der Massgabe dass in dem Fall, in dem $R^5$ -OH bedeutet, mindestens ein Wasserstoffatom in 4- bis 7-Stellung des Sechsringes substituiert ist.

Halogen-indenoncarbonsäuren der Formel a, welche in 4- bis 7-Stellung Wasserstoffatome, also keine Substituenten aufweisen, sind nicht neu; sie sind aber wie auch ihre Derivate ebenfalls als Ausgangsprodukte für die Herstellung der erfindungsgemässen Polymeren der Formel I geeignet.

Die Halogen-indenoncarbonsäuren der Formel a (und die bekannten in 4- bis 7-Stellung nicht substituierten) sind Grundkörper für alle übrigen Verbindungen der Formel a.

Die Herstellung der freien Halogen-indenoncarbonsäuren erfolgt nach einem neuen Verfahren, welches dadurch gekennzeichnet ist, dass man ein aromatische Verbindung der Formel b

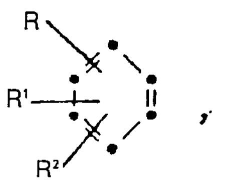
(b)

in der an mindestens 2 benachbarten C-Atomen des Kerns die H-Atome nicht substituiert sind und in der R, $R^1$ und $R^2$ dieselbe Bedeutung wie in Formel I haben, aber auch alle drei Reste gleichzeitig H bedeuten können, entweder zusammen mit einem Dihalogenmaleinsäureanhydrid der Formel c

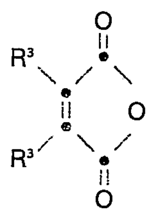
(c)

oder zusammen mit einem Ester der Formel d

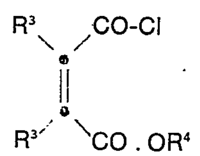
(d)

wobei $R^3$ dieselbe Bedeutung wie in Formel I hat und $R^4$ einen niedermolekularen organischen Rest, insbesondere einen aliphatischen, einen cycloaliphatischen, einen aliphatischaromatischen oder einen aromatischen Rest, bedeutet, jeweils im etwa stöchiometrischen Mengenverhältnis, in Gegenwart von $AlCl_3$, gegebenenfalls in Gegenwart von inerten Schmelz- und/oder Lösungsmitteln, bei Temperaturen zwischen 40° und 150°C einer Kondensationsreaktion unterwirft und das so erhaltene Reaktionsprodukt hydrolysiert.

Die Hydrolyse erfolgt zweckmässig durch Eingiessen der zunächst durch die Kondensationsreaktion erhaltenen Komplexverbindung in eine Mineralsäure/Wasser/Eis-Mischung. In manchen Fällen, insbesondere, wenn nach Entfernung aller Lösungsmittel der feste Rückstand pulverig zerfällt, ist auch die Hydrolyse durch Zugabe von verdünnten Mineralsäuren, wie Salzsäure, zu dem trockenen Produkt unter Kühlung möglich. Vorzugsweise wird die Umsetzung wie oben beschrieben einstufig durchgeführt. Grundsätzlich lässt sich das Verfahren aber auch in der Weise 2-stufig ausführen, dass man in dem Reaktionsgemisch in der 1. Stufe in an sich bekannter Weise eine Ketocarbonsäure der Formel e

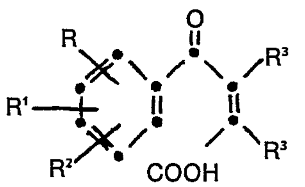
(e)

herstellt und dieselbe isoliert, und dass man in der 2. Stufe die Ketosäure der Formel e ebenfalls in Gegenwart von $AlCl_3$, gegebenenfalls in Gegenwart von inerten Schmelz- und/oder Lösungsmitteln, aber bei Temperaturen zwischen 40° und 150°C zur entsprechenden Indenoncarbonsäure der Formel I cyclisiert, welche durch Hydrolyse aus dem entstandenen Reaktionsgemisch freigesetzt wird.

Die Reaktionsbedingungen für die 2. Reaktionsstufe entsprechen also praktisch voll denjenigen des 1-Stufenverfahrens, nur mit dem Unterschied, dass in dieser 2. Reaktionsstufe anstelle der ursprünglichen Ausgangsprodukte der Formel b und c bzw. d breits das Zwischenprodukt der Formel e vorliegt.

Die Ausgangsprodukte der Formel b und c bzw. d sind an sich bekannt und können nach üblichen Methoden hergestellt werden. Bevorzugt werden als Dihalogenmaleinsäureanhydrid der Formel c oder als Ester der Formel d jeweils die Verbindungen eingesetzt, welche den Formeln c und d mit $R^3$=Cl entsprechen. Grundsätzlich können auch gemischte Halogenverbindungen, welche gleichzeitig Cl und Br enthalten, eingesetzt werden. Diese Produkte sind aber bekanntlich schwerer zugänglich als beispielsweise Dichlormaleinsäureanhydrid.

Als Ester der Formel d kann eine Vielzahl von Verbindungen eingesetzt werden, da der Rest $R^4$ ein grosse Zahl von organischen Gruppen, welche sich von entsprechenden Alkoholen und Phenolen ableiten, darstellen kann. Bevorzugt bedeutet $R^4$ einen aliphatischen Rest mit insgesamt 1 bis 4 C-Atomen, vorzugsweise $CH_3$.

In dem Reaktionsgemisch, das bei dem Verfahren zur Herstellung der Halogen-indenoncarbonsäuren vorgelegt wird, sollte das $AlCl_3$ vorzugsweise in einer Menge von mindestens 1 Mol pro Mol des Dihalogenmaleinsäureanhydrids der Formel c oder des Esters der Formel d vorliegen.

Wird in Gegenwart von inerten Lösungsmitteln gearbeitet, so sind solche Lösungsmittel bzw. Lösungsmittelgemische, welche einen Kochpunkt von mindestens 40°C aufweisen, einzusetzen. Geeignete Lösungsmittel sind beispielsweise mehrfach halogenierte aliphatische und aromatische Kohlenwasserstoffe, wie o-, m- und p-Dichlorbenzol, Dichlormethan und 1,1,2,2-Tetrachloräthan.

Auch die Anwendung von inerten Schmelzmitteln ist möglich. Als Schmelzmittel kommen anorganische Salze oder organische Schmelzmittel oder Gemische der anorganischen Salze mit den organischen Schmelzmittel in Frage. Die Menge der angewendeten Schmelzmittel muss vorzugsweise so gross gewählt werden, dass im Gemisch mit dem $AlCl_3$ in der Reaktionsmischung ein Schmelzpunkt resultiert, welcher niedriger als die Reaktionstemperatur ist. Zweckmässig werden die eingesetzten Mengen so gewählt, dass im Gemisch mit dem $AlCl_3$ eine Schmelzpunktserniedrigung, beispielsweise aufgrund von Eutektikumbildung, resultiert.

Als organische Schmelzmittel werden bevorzugt Dialkylamide niedermolekularer Carbonsäuren, wie z. B. Dimethyl- oder Diäthylformamid, eingesetzt. Die Menge sollte dabei vorzugsweise so gewählt werden, dass das Molverhältnis Dialkylamid zu $AlCl_3$ in den Grenzen 1:4 und 1:1 liegt.

Als anorganische Salze werden bevorzugt NaCl und/oder KCl, gegebenenfalls zusammen mit Dimethylformamid als organisches Schmelzmittel, eingesetzt. Weitere geeignete anorganische Schmelzmittel (insbesondere Mischungen) sind der Publikation von C. A. Thomas, «Anhydrous Aluminum Chloride In Organic Chemistry» (ACS Monogr. Ser.) (New York 1941), zu entnehmen.

Alle übrigen, oben erwähnten Ausgangsprodukte für die erfindungsgemässen Polymeren mit Gruppen der Formel I sind Ester der beschriebenen Halogen-indenoncarbonsäuren.

Die Herstellung der Ester der Formel a, in der $R^5$ den Rest $-O-(CH_2)_m-OH$ bedeutet, erfolgt durch Veresterung der entsprechenden Halogen-indenoncarbonsäure mit dem jeweiligen Alkylenglykol in Gegenwart von inerten organischen Lösungsmitteln (z. B. Äthylenglykol-dimethyläther) und Veresterungskatalysatoren (z. B. Schwefelsäure).

Die Herstellung der Ester der Formel a, in der $R^5$ den Rest $-O-(CH_2-CH_2 . O)_n-CH_2-CH_2-OH$ bedeutet, erfolgt durch Addition von n Molekülen Äthylenoxid an die jeweilige Halogen-indenoncarbonsäure.

Die Ester der Formel a, in der $R^5$ den Rest $-O-(CH_2)_m-O . CO-C(R^6)=CH_2$ bedeutet, werden durch Veresterung des jeweiligen Hydroxy-alkylesters [d. h. $R^5$ bedeutet den Rest $-O-(CH_2)_m-OH$] mit Acrylsäure oder Methacrylsäure hergestellt.

Die Ester der Formel a, in der $R^5$ den Rest $-O-CH_2-\underset{OH}{CH}-CH_2-O . CO-\underset{R^6}{C}=CH_2$ bedeutet, werden entweder durch Umsetzung von Acrylsäure- oder Methacrylsäureglycidylester mit der jeweiligen Halogen-indenoncarbonsäure oder aber durch Umsetzung von Acryl- oder Methacrylsäure mit dem jeweiligen Halogen-indenoncarbonsäureester der Formel a, in der $R^5$ den Rest $-O-CH_2-CH\overset{O}{—}CH_2$ bedeutet, hergestellt.

Die Herstellung des zuletzt genannten Produktes der Formel a erfolgt durch Umsetzen von Epichlorhydrin mit der jeweiligen Halogenindenoncarbonsäure.

Die Ester der Formel a, in der $R^5$ den Rest $-O-CH_2-CH_2-O-CH=CH_2$ bedeutet, werden durch Kondensation von α-Chloro-äthylvinyläther und der jeweiligen Halogen-indenoncarbonsäure hergestellt.

Bei allen Verfahren zur Herstellung der Halogen-indenoncarbonsäureester der Formel a wird vorzugsweise in Gegenwart von inerten organischen Lösungsmitteln gearbeitet.

Die erfindungsgemässen Polymeren lassen sich unter der Einwirkung von Licht vernetzen und eignen sich beispielsweise zur Herstellung von Druckplatten für das Offsetdruckverfahren, zur Herstellung von Photooffset-Lacken, für die unkonventionelle Photographie zum Anfärben von nach dem Belichten und Entwickeln sichtbaren Polymerbildern mit geeigneten Farbstoffen, wie öllösliche Farbstoffe oder, wenn das Polymere saure Gruppen, wie Carbonsäure- oder Sulfonsäuregruppen aufweist, kationische Farbstoffe. Die erindungsgemässen Polymeren finden insbesondere Anwendung als sogenannte Photoresists zur Herstellung von gedruckten Schaltungen nach an sich bekannten Methoden. Dabei wird die mit der lichtempfindlichen Schicht versehene Seite der Leiterplatte durch ein das Leiterbild aufweisendes Dianegativ belichtet und dann entwickelt, wobei man die unbelichteten Stellen der Schicht durch Entwicklungsflüssigkeit herauslöst. Die Belichtung kann mit Sonnenlicht, Kohlelichtbogen oder Xenonlampen durchgeführt werden. Mit Vorteil wird die Belichtung mit Quecksilberhochdrucklampen vorgenommen. Die Trägermaterialien können nach an sich üblichen Techniken mit den lichtempfindlichen Polymeren beschichtet werden, z. B. durch Tauchverfahren, Sprüh-, Schleuder-, Kaskaden- oder Vorhangguss oder sogenanntes «roller-coating».

Die oben dargelegte Verwendung der Polymeren, die seitenständig Gruppen der Formel I enthalten, zur Vernetzung unter der Einwirkung von Licht, besonders zum Erzeugen von Abbildungen, ist weiterer Gegenstand dieser Erfindung.

Beispiele für die Herstellung von lichtempfindlichen Polymeren gemäss der Erfindung

Beispiel 1

2,5 g eines Copolymeren von Methylmethacrylat und Glycidyl-Methacrylat [(Mol-Verhältnis 1:1), Mw 60 000] werden zusammen mit 1,8 g (8,63 mM) Chlorindenoncarbonsäure und 0,01 g Tetramethylammoniumchlorid in 20 g Cyclohexanon gelöst. Diese Lösung wird während ca. 2 Stunden auf 120°C erhitzt. Nach dem Abkühlen auf Raumtemperatur wird die Lösung filtriert. Das Filtrat kann direkt als Beschichtungslösung zur Herstellung von Photolackschichten verwendet werden.

Das erhaltene Polymer weist neben Strukturelementen der Formel

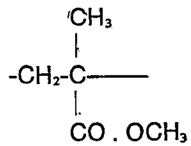

Strukturelemente der Formel

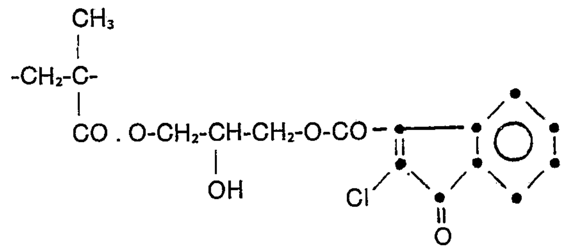

auf. Es ist wie alle in den folgenden Beispielen beschriebenen Polymeren orange gefärbt.

Beispiel 2

10 g eines Copolymeren von Methylvinyläther und Maleinsäureanhydrid (Mol-Verhältnis 1:1 alternierend, Mw 740 000), 8 g (0,03 M) Chlorindenoncarbonsäure-2-hydroxyäthylester und 0,15 ml conc. Schwefelsäure werden in 120 ml trokkenem Tetrahydrofuran gelöst. Die Lösung wird während 24 Stunden unter Stickstoff am Rückfluss gekocht. Anschliessend wird auf Raumtemperatur abgekühlt, die Lösung filtriert. Das Filtrat kann direkt zu Beschichtungszwecken verwendet werden.

Zur Bestimmung der Zusammensetzung wird eine kleine Probe des Filtrates in Äther ausgefällt.

Elementaranalyse:

| | | | |
|---|---|---|---|
| Berechnet: | 55,27% C | 4,46% H | 6,28% Cl |
| Gefunden: | 55,85% C | 4,59% H | 5,56% Cl |

Beispiel 3

2,66 g eines Copolymeren von Äthylen und Maleinsäureanhydrid (1:1 alternierend, Mw 100 000) und 5,34 g (0,020 Mol) Chlorindenoncarbonsäure-2-hydroxyäthylester werden in 40 ml trockenem N-Methylpyrrolidon gelöst. Diese Lösung wird während 48 Stunden bei 100°C gekocht. Nach Abkühlen auf Raumtemperatur wird filtriert. Das Filtrat kann direkt zu Beschichtungszweckeneingesetzt werden. Eine Probe wird in Äther gefällt, und die Grenzviskositätszahl des Produkts bestimmt. (η intr.) (DMF, 20°C) : 0,3 dl/g.

Beispiel 4

Es wird analog Beispiel 1 gearbeitet. Als Ausgangspolymer wird Gantrez 119 AN® verwendet. Es handelt sich um eine Handelprodukt der Firma GAF Corp., USA, und zwar um ein Copolymer von Vinylmethyläther und Maleinsäureanhydrid mit einem Mw von ungefähr 740 000. Als Chlorindenonsäurederivat wird der Chlor--indenoncarbonsäure-2-hydroxyäthylester eingesetzt. Das Gewichtsverhältnis dieser Reaktionspartner beträgt 2:5.

Es resultiert ein lichtempfindliches Polymer mit einer Grenzviskositätszahl ($\eta$ intr.) von 0,25 dl/g (DMF; 20°C).

Beispiel 5

Es ist analog Beispiel 4 verfahren, nur mit dem Unterschied, dass 2-Chlor-5,7-dimethyl-indenoncarbonsäure-2-hydroxy-äthylester anstelle von Chlor-indenoncarbonsäure-2-hydroxyäthylester eingesetzt wird und dass das Gewichtsverhältnis der Reaktionspartner 2:2,32 anstelle von 2:5 beträgt. Es resultiert ein durch Licht vernetzbares Polymer mit einer $\eta$ intr. von 0,22 dl/g (DMF; 20°C).

Beispiel 6

10,45 g Polymethacrylsäurechlorid (Mw 40 000), gelöst in 10 ml trockenem Toluol, werden zusammen mit 12,9 g (0,05 M) Chlorindenoncarbonsäure-2-hydroxyäthylester in 80 ml Chlorbenzol gelöst. Zu dieser Lösung werden 10 g fein pulveriertes 3Å-Molekularsieb beigefügt. Diese Lösung wird am Rückfluss während ca. 2 Stunden gekocht. Nach dem Abkühlen auf Raumtemperatur wird die Reaktionslösung filtriert und das Filtrat anschliessend in 2 l Methanol gefällt. Das resultierende, helle Pulver weist nach dem Trocknen eine Grenzviskositätszahl, $\eta$ intr. (DMF, 20°C) von 0,1 dl/g auf.

Beispiele für die Herstellung von Halogen-indenoncarbonsäuren und entsprechenden Estern, welche als Ausgangssubstanzen zur Herstellung der lichtempfindlichen Polymeren Verwendung finden

Beispiel a

In einem mit HCl-Ableitung versehenen Rührkolben wird eine Mischung bestehend aus 88 g pulverisiertem wasserfreien $AlCl_3$, 16 g NaCl, 5,4 g KCl und 16,7 g (0,1 Mol) Dichlormaleinsäureanhydrid vorgelegt und für kurze Zeit (bis geschmolzen) auf 90-100°C aufgeheizt. Bei 70-75°C fügt man im Verlaufe von 45 Minuten 10,6 g (0,1 Mol) m-Xylol zu. Nach weiteren 30 Minuten Rühren bei 75-80°C wird die Schmelze in ein Gemisch aus 25 ml konz. Salzsäure, Wasser und Eis eingetragen (Endvolumen ca. 1 Liter) und das Produkt abfiltriert. Nach dem Waschen mit Wasser und Trocknung im Vakuum bei 60°C erhält man 23,0 g (97% d. Th.) gelborange 1-Oxo-2-chlor-5,7-dimethyl-inden-carbonsäure-(3). Gemäss Dünnschichtchromatogramm enthält das Produkt nur geringfügige Verunreinigungen und kann daher direkt für weitere Umsetzungen verwendet werden. Das aus Essigsäureäthylester umkristallisierte Produkt schmilzt bei 255-256°C.

$^1$H-NMR-Spektrum [100 mHz, $\delta$-Werte in ppm, Lösung in $(CD_3)_2SO$]: 2,27 (S, 3H, $-CH_3$); 2,38 (S, 3H, $-CH_3$); 6,8 und 7,2 (2H, aromat.); ca. 13,5 (breites Signal, 1H, $D_2O$ austauschbar).

Chemische Analyse und $^1$H-NMR-Spektrum entsprechen der Formel

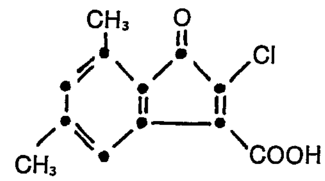

Auf analoge Weise wurden die in der folgenden Tabelle aufgeführten Indenone hergestellt.

| Bei-spiel Nr. | Verbin-dung der Formel b | 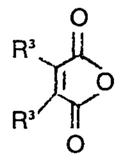 | Eintragen der Verb. der Formel b in die Schmelzen | | Reaktion nach dem Eintragen von Verb. der Formel b | | Verbindung der Formel a | Aus-beute % d.Th. | Umkristalli-siert aus | Smp. |
|---|---|---|---|---|---|---|---|---|---|---|
| | | | Dauer h | Temper. °C | Dauer h | Temper. °C | | | | |
| b | m-Xylol | $R^3=Br$ | 1 | 70-75 | 0,5 | 75-80 | 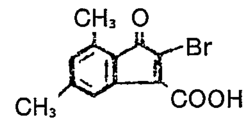 | 79 | Essigsäure-äthylester | 257 |
| c | Benzol | $R^3=Cl$ | 0,75 | 70-75 | 2 | 80-85 | 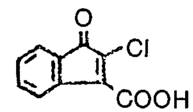 | 90 | Wasser + Äthanol (1:1) | 228 |
| d | Toluol | $R^3=Cl$ | 0,75 | 70-75 | 1,5 | 80-85 | 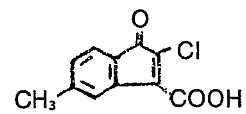 | 91 | Essigsäure-äthylester | 239 |
| e | p-Xylol | $R^3=Cl$ | 0,75 | 70-75 | 2 | 80-85 | 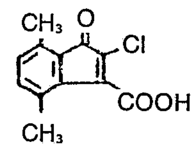 | 88 | Chlorbenzol | 170 |
| f | 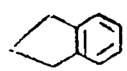 | $R^3=Cl$ | 1 | 70-75 | 1 | 75-80 | 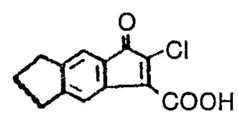 | 95 | Toluol | 239 |
| g | Mono-chlor-benzol | $R^3=Cl$ | 1 | 80-85 | 2,5 | 95-100 | 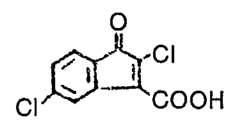 | 55 | Essigsäure-äthylester | 258 |

| Bei-spiel Nr. | Verbin-dung der Formel b | 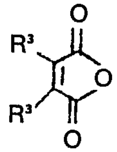 | Eintragen der Verb. der Formel b in die Schmelzen | | Reaktion nach dem Eintragen von Verb. der Formel b | | Verbindung der Formel a | Aus-beute % d.Th. | Umkristalli-siert aus | Smp. |
|---|---|---|---|---|---|---|---|---|---|---|
| | | | Dauer h | Temper. °C | Dauer h | Temper. °C | | | | |
| h | 1,2,3-Tri-methyl-benzol | $R^3$=Cl | 1 | 75-80 | 0,5 | 75-80 | 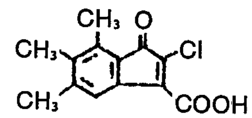 | 95 | Eisessig | 225 |
| i | 1,2,4-Tri-methyl-benzol | $R^3$=Cl | 1 | 75-80 | 0,5 | 75-80 | 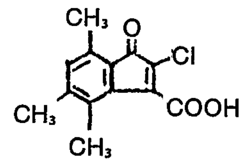 | 97 | Toluol | 193 |
| s | n-Butyl-benzol | $R^3$=Cl | 0,75 | 75-80 | 1 | 80-85 | 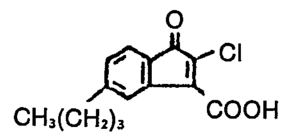 | 98 | Cyclohexan | 157 |
| t | Äthyl-benzol | $R^3$=Cl | 0,5 | 95-100 | 0,5 | 95-100 | 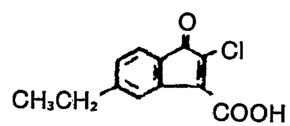 | 99 | Cyclohexan | 150 |

Beispiel j

In einem Rührkolben mit HCl-Ableitung wird eine Mischung, bestehend aus 53 g pulverisiertem wasserfreien $AlCl_3$ und 16,7 g (0,1 Mol) Dichlormaleinsäureanhydrid in 80 ml 1,2-Dichloräthan vorgelegt. Dann fügt man bei 20-30°C innerhalb von etwa 30 Minuten 7,8 g (0,1 Mol) Benzol zu und rührt bei der angegebenen Temperatur, bis eine Probe im Dünnschichtchromatogramm vollständige Umsetzung anzeigt. Die Reaktionsmasse wird sodann in ein Gemisch aus 25 ml konz. Salzsäure, Wasser und Eis eingetragen (Endvolumen ca 600 ml) und die Dichloräthanlösung im Vakuum zur Trockene chloraethanlösung im Vakuum zur Trockene einacrylsäure, welche unter analogen Bedingungen wie bei der Herstellung der Chlorindenoncarbonsäure nach dem 1-Stufenverfahren gemäss Beispiel c, d. h. in Gegenwart desselben Schmelzmittelgemisches und unter Anwendung der gleichen Temperaturen, cyclisiert wird.

Ausbeute 17,0 g, entsprechend 82% d. Th. Smp.: 228°C. Auf analoge Weise lassen sich nach diesem zweistufigen Verfahren die anderen Halogen-indenoncarbonsäuren der Beispiele a und b, sowie d bis i darstellen.

Die gleichen Endprodukte werden erhalten, wenn in obigen Beispielen anstelle von Dichlor- bzw. Dibrom-maleinsäure-anhydrid ein Säurechlorid der Formel

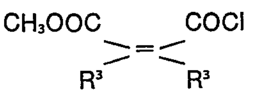

$R^3$ = Cl oder Br

in äquimolekularer Menge verwendet wird.

Beispiel k

Man setzt gemäss Beispiel j 7,8 g (0,1 Mol) Benzol mit Dichlormaleinsäureanhydrid in Gegenwart von $AlCl_3$ um und filtriert die erhaltene braune Reaktionslösung (ohne Zersetzung mit verdünnter Salzsäure) von etwas ungelöstem $AlCl_3$ ab. Das Filtrat wird im Rotationsverdampfer im Vakuum zur Trockene eingedampft. Den Rückstand erhitzt man während 30 Min. auf 150°C, wobei er pulverig zerfällt. Nach üblicher Aufarbeitung durch Eintragen in verdünnte Salzsäure, Isolierung und Trocknung erhält man ein Rohprodukt, welches durch Umkristallisation aus Chlorbenzol von schwerlöslichem dunklem Nebenprodukt befreit wird. Man erhält 6,2 g entsprechend 30% d. Th. 1-Oxo-2-chlor-inden--carbonsäure-(3).

Beispiel l

In einem Rührkolben mit HCl-Ableitung werden 14,6 g (0,2 Mol) Dimethylformamid vorgelegt und langsam 54 g (0,1 Mol) pulverisiertes wasserfreies $AlCl_3$ und 16,7 g (0,4 Mol) Dichlormaleinsäureanhydrid eingetragen, wobei durch Kühlung die Temperatur auf unter ca. 80°C gehalten wird. Bei 70-75°C fügt man im Verlaufe von 45 Minuten 10,6 g (0,1 Mol) m-Xylol zu und rührt die dunkle Schmelze während 1,5 Stunden bei 75-80°C. Die weitere Aufarbeitung geschieht wie in Beispiel a beschrieben. Man erhält 22,9 g, entsprechend 97% d. Th. an chromatographisch annähernd reiner 1-Oxo-2-chlor--5,7-dimethyl-inden-carbonsäure-(3).

Auf analoge Weise lassen sich die in den Beispielen b bis i beschriebenen Halogenindenon-carbonsäuren darstellen. Es werden hierbei die in den betreffenden Beispielen angegebenen Reaktionstemperaturen verwendet. Die Reaktionsdauer (nach dem Eintragen von Verbindung der Formel b) wird hierbei auf das Dreifache der angegebenen Zeitdauer verlängert.

Beispiel m

In einem Rührkolben mit HCl-Ableitung werden 54 g pulverisiertes wasserfreies $AlCl_3$ und 10,6 g (0,1 Mol) m-Xylol in 70 ml 1,1,2,2-Tetrachloraethan vorgelegt. Dann fügt man innerhalb von etwa 30 Minuten 17,8 g (0,1 Mol) Dichlormaleinsäure-anhydrid zu und rührt bei 20-30°C während 2 Stunden. Hierauf hält man die Mischung während 10 Stunden auf einer Temperatur von 55-60°C und giesst in Eiswasser, welches 20 ml konz. Salzsäure enthält. Die Tetrachloraethanlösung wird abgetrennt, mit ca. 250 ml Wasser versetzt und im Rotationsverdampfer unter Vakuum das Lösungsmittel abdestilliert. Das Produkt wird abfiltriert, mit etwas Wasser gewaschen und in 800 ml Wasser unter Zusatz der notwendigen Menge Natriumcarbonat bei Raumtemperatur gelöst. Nach Abtrennung einer unlöslichen Verunreinigung durch Filtration wird das Filtrat mit überschüssiger Salzsäure versetzt und das ausgefallene Produkt auf übliche Weise isoliert. Man erhält 20,5 g (87% d. Th.) 1-Oxo-2-chlor-5,7-dimethyl-inden-carbonsäure-(3), deren Eigenschaften den im Beispiel a beschriebenen entsprechen.

Beispiele n bis p

Auf analoge Weise werden dargestellt: Unter Verwendung von o-Xylol die 1-Oxo-2-chlor-5,6--dimethylinden-carbonsäure-(3), 98% d. Th., Smp. 229° (umkristallisiert aus Eisessig). Aus p-Xylol wird das Beispiel c entsprechende Produkt erhalten und aus 1,2,4-Trimethylbenzol erhält man eine 1-Oxo-2-chlor-4,5,7-trimethylinden-carbonsäure-(3) vom Smp. 194° (umkristallisiert aus Toluol).

Beispiel q

71 g (0,3 Mol) 1-Oxo-2-chlor-5,7-dimethylinden-carbonsäure-(3) werden in 400 ml Äthylenglykol-dimethyläther und 250 ml Äthylenglykol suspendiert. Unter Rühren fügt man 70 ml konzentrierte Schwefelsäure zu und hält die Mischung während 48 Stunden auf einer Temperatur von 55-60°. Die Reaktionsmasse wird in Eiswasser eingetragen und abfiltriert. Der Nutschenrückstand wird in 2 Liter Wasser angeschlämmt, mit Natriumcarbonat auf pH 8 gestellt, filtriert und mit 500 ml Wasser gewaschen. Man erhält nach Trocknung 42 g des Esters der Formel

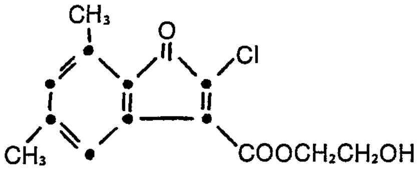

Schmelzpunkt 112° (umkristallisiert aus Toluol).

Aus dem sodaalkalischen Filtrat können durch Ausfällung mit Salzsäure 22 g nicht veresterte Carbonsäure zurückgewonnen und wieder eingesetzt werden.

Beispiel r

2-Chlor-indenoncarbonsäureester der Formel

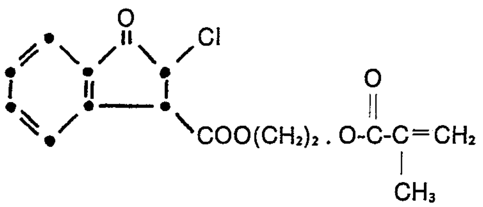

2,0 g (0,03 M) Chlorindenoncarbonsäure-2-hydroxy-äthylester werden in 20 ml trockenem Methylenchlorid gelöst. Zu dieser Lösung werden 3 g (0,03 M) Natriumcarbonat zugefügt. Zu diesem Gemisch wird eine Lösung von 3,5 g (0,033 M) Methacrylsäurechlorid in 5 ml trockenem Methylenchlorid zugetropft. Nach erfolgter Reaktion wird die Lösung durch Filtration von gebildetem Natriumchlorid und Soda abgetrennt.

Dal Filtrat wird neutral gewaschen und anschliessend am Rotationsverdampfer zur Trockene eingedampft. Ausbeute an Ester: 84% d. Th.

Fp: 98-100°C

NMR($CDCl_3$):

2,0 ppm [3H], 2,6 ppm [4H]
5,6 bzw. 6,2 ppm [2H],
7,1-7,8 ppm [4H]

| | | | |
|---|---|---|---|
| EA: | | | |
| Berechnet: | 59,92% C | 4,09% H | 11,05% Cl |
| Gefunden: | 59,86% C | 4,03% H | 11,27% Cl |

$C_{16}H_{13}O_5Cl$
(320,73)

Anwendungsbeispiele

Beispiel I

Die gemäss Beispiel 1 hergestellte Beschichtungslösung wird zur Beschichtung von kupferkaschierten Epoxilaminaten verwendet:

Mittels einer Beschichtungszentrifuge werden kupferkaschierte Epoxiplatten mit der oben erwähnten Polymerlösung beschichtet. Nach dem Trocknen resultiert ein ca 5 µm dicker Polymerfilm auf der Kupferoberfläche. Die so beschichtete trockene Platte wird durch ein Strichnegativ mit UV-Licht (Wellenlänge über 320 nm) Belichtungsquelle: Quecksilberhochdrucklampe 400 W, Abstand 50 cm/ während 3' belichtet. Nach dem Belichten ist das entstandene Bild bereits sichtbar, durch Entwickeln in Cyclohexanon werden die nicht belichteten Anteile herausgelöst. Das nun blanke Kupfer wird durch Ätzen mit Eisen(III)-chorid herausgelöst, wobei ein dem Strichnegativ entsprechendes Kupferbild erhalten wird.

Beispiel II

Die gemäss Beispiel 4 hergestellte Beschichtungslösung wird zur Beschichtung von Aluminiumfilmen verwendet:

Mittels einer Beschichtungszentrifuge wird die Aluminiumfolie mit der oben erwähnten Polymerlösung beschichtet und anschliessend getrocknet. Nach dem Trocknen resultiert ein ca 5 µm dicker Polymerfilm auf dem Aluminiumträger. Die so beschichtete Platte wird durch ein Strichnegativ mit UV-Licht (Wellenlänge über 320 nm, Belichtungsquelle: Quecksilberhochdrucklampe 400 W, Abstand 50 cm) während 1' belichtet. Nach dem Belichten ist das entstandene Bild bereits sichtbar, durch Entwickeln in 5%-iger Natriumcarbonatlösung werden die nicht belichteten Anteile heraus gelöst. Das resultierende Reliefbild kann mittels kationischer Farbstoffe wie z. B. Maxilonrot intensiver gemacht werden. Es entsteht dabei die gefärbte Abbildung der Negativvorlage.

## Patentansprüche

1. Ein unter der Einwirkung von Licht vernetzbares Polymer, dessen Durchschnittsmolekulargewicht mindestens 1000 beträgt und das seitenständige Gruppen der Formel I

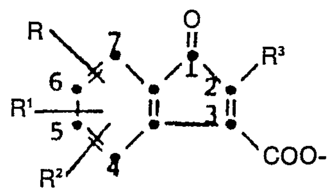

(I)

aufweist, worin

$R^3$ für Cl oder Br, vorzugsweise für Cl, steht und R, $R^1$ und

$R^2$ gleich oder verschieden sind,

R einen n-Alkylrest mit 1 bis 4 C-Atomen, vorzugsweise $CH_3$, oder aber H, Cl, Br oder F,

$R^1$ einen n-Alkylrest mit 1 bis 4 C-Atomen, vorzugsweise $CH_3$, oder aber H,

$R^2$ H oder $CH_3$ oder aber

$R^1$ und $R^2$ zusammen die Gruppe $-CH_2CH_2CH_2-$ bedeuten, mit der Massgabe, dass im letzteren Fall die Bindung an den Sechsring über die C-Atome in 5- und 6-Position des Kerns erfolgt, wobei der Anteil an Gruppen der Formel I 5-100%, bevorzugt 20-100%, bezogen auf die Anzahl der wiederkehrenden Strukturelemente des Polymeren, beträgt.

2. Ein Polymer nach Anspruch 1, dadurch gekennzeichnet, dass es sich um ein Polymer aus der Gruppe der Phenol-Formaldehyd-Harze, der Novolake, der Phenoxy-Harze und der Polymeren handelt, die durch Homo- oder Copolymerisation von C=C-Doppelbindungen enthaltenden Monomeren entstehen.

3. Ein Polymer nach Anspruch 2, dadurch gekennzeichnet, dass es sich um ein Homo- oder Copolymerisat von reaktive C=C-Doppelbindungen enthaltenden Monomeren mit Durchschnittsmolekulargewichten zwischen 30 000 u. 1 000 000 handelt, und dass dasselbe die Gruppen der Formel I in Molekülkettengliedern der Formeln II bis VI

|
CH-CO . OH
|
$CH-CO . O-(CH_2)_m-E$ (II)
|

|
CH-CO . OH
|
$CH-CO . O-CH_2-CH_2-(O-CH_2-CH_2)_n-E$ (III)
|

|
$CH_2$
|
$R^6-C-CO . O-(CH_2)_m-E$ (IV)
|

|
$CH_2$ OH
| |
$R^6-CH-CO . O-CH_2-CH-CH_2-E$ (V)
|

|
$CH_2$
|
$CH-O-CH_2-CH_2-E$ (VI)
|

enthält, in denen der Rest E der Formel I nach Anspruch 1 entspricht, m eine Zahl von 2 bis 6, n eine Zahl von 1 bis 10 und $R^6$ H oder $-CH_3$ darstellen.

4. Ein Polymer nach Anspruch 3, dadurch gekennzeichnet, dass es ausser einem oder mehreren der Strukturelemente der Formeln II bis VI gleichzeitig Strukturelemente der Formel IX

$$\begin{array}{cc} X_1 & X_2 \\ | & | \\ -C- & C- \\ | & | \\ X_3 & X_4 \end{array} \quad (IX)$$

enthält, worin

$X_1$ und $X_3$ je Wasserstoff, $X_2$ Wasserstoff, Chlor oder Methyl, $X_4$ Wasserstoff, Methyl, Chlor, -CN, -COOH, Phenyl, Methylphenyl, Methoxyphenyl, Cyclohexyl, -COO-Alkyl mit 1-12 C-Atomen im Alkylteil, -COO-Phenyl, 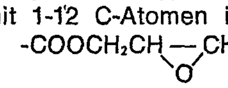, -COO-Alkyl-OH mit 1-3 C-Atomen im Alkylteil, -OCO-Alkyl mit 1-4 C-Atomen im Alkyl, -OCO-Phenyl, -CO-Alkyl mit 1-3 C-Atomen im Alkyl, Alkoxy mit 1-6 C-Atomen oder Phenoxy oder $X_1$ und $X_2$ je Wasserstoff und $X_3$ und $X_4$ zusammen die Gruppierung 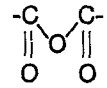 oder je -COOH oder -COOAlkyl mit 1-6 C-Atomen im Alkyl bedeuten.

5. Ein Polymer nach Anspruch 4, das Strukturelemente der Formel IX enthält, worin $X_1$ und $X_3$ je Wasserstoff, $X_2$ Wasserstoff oder Methyl und $X_4$ $-OCOCH_3$, -COOH oder -COOAlkyl mit 1-8 C-Atomen im Alkyl bedeuten oder worin $X_1$, $X_2$ und $X_3$ je Wasserstoff und $X_4$ -CN, Chlor oder Phenyl bedeuten.

6. Ein Polymer nach Anspruch 2, dadurch gekennzeichnet, dass es sich um ein Produkt mit der Ausgangsbasis Novolak mit Durchschnittsmolekulargewichten zwischen 1000 und 100 000 handelt und dass es wiederkehrende Strukturelemente der Formel X

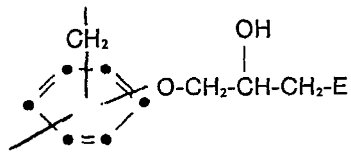 (X)

in der der Rest E der Formel I nach Anspruch 1 entspricht aufweist.

7. Ein Polymer nach Anspruch 4, dadurch gekennzeichnet, dass es Molekülkettenglieder der Formel XVII

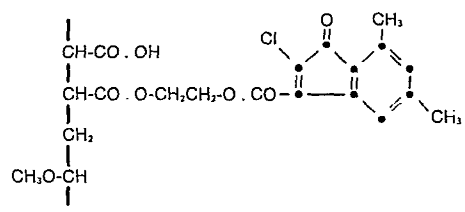 (XVII)

aufweist.

8. Ein Polymer nach Anspruch 4, dadurch gekennzeichnet, dass es Molekülkettenglieder der Formel XVIII

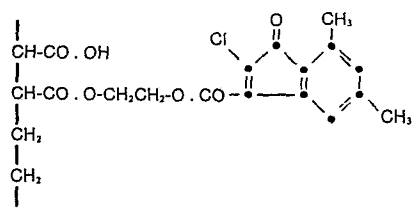 (XVIII)

aufweist.

9. Ein Polymer nach Anspruch 4, dadurch gekennzeichnet, dass es Molekülkettenglieder der Formel XIX

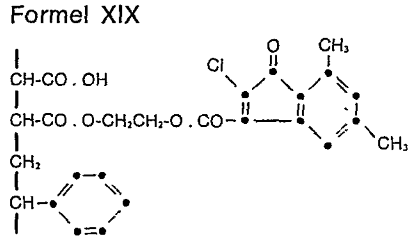 (XIX)

aufweist.

10. Ein Polymer nach Anspruch 3, dadurch gekennzeichnet, dass es Molekülkettenglieder der Formel XX

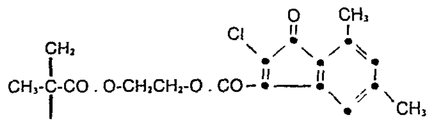

(XX)

aufweist.

11. Ein Polymer nach Anspruch 3, dadurch gekennzeichnet, dass es Molekülkettenglieder der Formel XXI

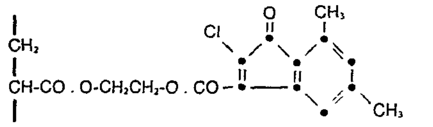

(XXI)

aufweist.

12. Verwendung eines Polymeren nach Anspruch 1 zur Vernetzung unter der Einwirkung von Licht, besonders zum Erzeugen von Abbildungen.

13. Ein Verfahren zur Herstellung eines Polymeren nach Anspruch 1, dadurch gekennzeichnet, dass man ein freie -OH-Gruppen enthaltendes Polymer, vorzugsweise ein Kunstharz vom Typ Novolak, Phenoxyharz oder Phenol-Formaldehyd-Harz, mit einer Verbindung der Formel XI

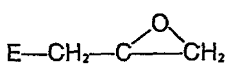

(XI)

in der E den Rest der Formel I darstellt, umsetzt.

14. Ein Verfahren zur Herstellung eines Polymeren nach Anspruch 1, dadurch gekennzeichnet, dass man ein anstelle freier -OH-Gruppen Glycidylgruppen enthaltendes Kunstharz, vorzugsweise vom Typ Novolak, Phenoxyharz oder Phenol-Formaldehyd-Harz, mit einer Halogen-indenoncarbonsäure der Formel E-H, in der der Rest E der Formel I entspricht, umsetzt.

15. Ein Verfahren zur Herstellung eines Polymeren nach Anspruch 1, welches die Gruppen der Formel I in Molekülkettengliedern der Formeln II oder III nach Anspruch 3 enthält, dadurch gekennzeichnet, dass man ein Homopolymer oder ein Mischpolymer von Maleinsäureanhydrid, welche ein gegebenenfalls substituiertes Maleinsäureanhydrid einpolymerisiert enthalten, wobei die Anhydridgruppe ganz oder teilweise erhalten ist, mit einer der Verbindungen der Formeln XII und XIII

$E-(CH_2)_m-OH$ (XII)

$E-(CH_2-CH_2-O)_n-CH_2-CH_2-OH$ (XIII)

in denen m eine Zahl von 2 bis 6 und n eine Zahl von 1 bis 10 bedeuten, und in denen E den Rest der Formel I darstellt, umsetzt.

16. Ein Verfahren zur Herstellung eines Polymeren nach Anspruch 1, welches die Gruppen der Formel I in Molekülkettengliedern der Formel II oder III nach Anspruch 3 enthält, dadurch gekennzeichnet, dass man in erster Reaktion Maleinsäureanhydrid, welches gegebenenfalls substituiert ist, mit einer der Verbindungen der Formeln (XII) oder (XIII) nach Anspruch 15 umsetzt, und in einer 2. Reaktion das jeweils erhaltene ungesättigte Monomer, gegebenenfalls zusammen mit anderen mindestens eine C=C-Doppelbindung aufweisenden Comonomeren, polymerisiert.

17. Ein Verfahren zur Herstellung eines Polymeren nach Anspruch 15 oder 16, dadurch gekennzeichnet, dass man die Umsetzung mit solchen Verbindungen der Formeln XII, welche auch den Formeln XXII oder XXIII

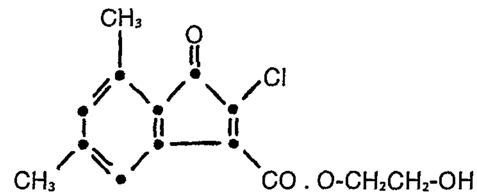

(XXII)

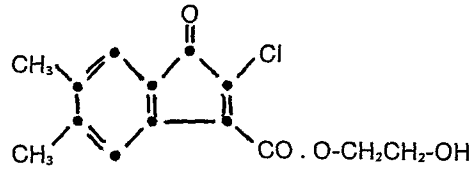

(XXIII)

entsprechen, durchführt.

18. Ein Verfahren zur Herstellung eines Polymeren nach Anspruch 1, welches die Gruppen der Formel I in Molekülkettenglieder der Formeln IV bis VI nach Anspruch 4 enthält, dadurch gekennzeichnet, dass man eine oder mehrere der Verbindungen der Formeln XIV bis XVI

$CH_2=C(R^6)-CO.O-(CH_2)_m-E$ (XIV)

$CH_2=C(R^6)-CO.O-CH_2-CH(OH)-CH_2-E$ (XV)

$CH_2=CH-O-CH_2-CH_2-E$ (XVI)

in denen $R^6$ H oder $CH_3$ darstellt und m und E dieselbe Bedeutung wie in Formel II nach Anspruch 3 haben, gegebenenfalls zusammen mit weiteren Comonomeren, polymerisiert.

19. Ein Verfahren zur Herstellung eines Polymeren nach Anspruch 1, welches die Gruppen der Formel I in Molekülkettengliedern der Formel IV nach Anspruch 3 enthält, dadurch gekennzeichnet, dass man ein Polyacrylsäure- oder ein Polymethacrylsäurechlorid oder ein entsprechendes Mischpolymer jeweils mit einem Ester der Formel $E-(CH_2)_m-OH$, in der E die Gruppe der Formel I darstellt und m eine Zahl von 2 bis 6 bedeutet, kondensiert.

20. Ein Verfahren zur Herstellung eines Polymeren nach Anspruch 1, welches die Gruppen der Formel I in Molekülkettengliedern der Formel V nach Anspruch 3 enthält, dadurch gekennzeichnet, dass man einen Polyacrylsäureglycidylester oder einen Polymethacrylsäureglycidylester oder ein entsprechendes Mischpolymer mit glycidylfreien Monomeren jeweils mit einer Halogen-indenoncarbonsäure der Formel

E-H, in der E die Gruppe der Formel I darstellt, umsetzt.

**Claims**

1. A Polymer which is crosslinkable under the action of light, has an average molecular weight of at least 1,000 and contains side groups of the formula I

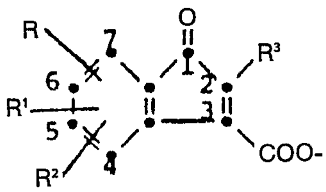

(I)

in which $R^3$ is Cl or Br, preferably Cl, and R, $R^1$ and $R^2$ are identical or different and R is a n-alkyl radical having 1 to 4 C atoms, preferably $CH_3$, or is H, Cl, Br or F, $R^1$ is a n-alkyl radical having 1 to 4 C atoms, preferably $CH_3$, or is H and $R^2$ is H or $CH_3$, or $R^1$ and $R^2$ together are the group $-CH_2CH_2CH_2-$, with the proviso that in the latter case the bond to the six-membered ring is via the C atoms in the 5-position and 6-position of the nucleus, the proportion of groups of the formula I being at least 5-100%, preferably 20-100%, based on the number of recurring structural elements of the polymer.

2. A polymer according to claim 1, which is a polymer from the group of the phenol-formaldehyde resins, the novolacs, the phenoxy resins and the polymers which are formed by homopolymerisation or copolymerisation of monomers containing C=C double bonds.

3. A polymer according to claim 2, which is a homopolymer or copolymer of monomers containing reactive C=C double bonds, the polymers having average molecular weights of between 30,000 and 1,000,000, and the said polymer containing the groups of the formula I in molecule chain members of the formulae II to VI

|
CH-CO . OH
|
$CH-CO . O-(CH_2)_m-E$ (II)
|

|
CH-CO . OH
|
$CH-CO . O-CH_2-CH_2-(O-CH_2-CH_2)_n-E$ (III)
|

|
$CH_2$
|
$R^6-C-CO . O-(CH_2)_m-E$ (IV)
|

|
$CH_2$ OH
| |
$R^6-CH-CO . O-CH_2-CH-CH_2-E$ (V)
|

|
$CH_2$
|
$CH-O-CH_2-CH_2-E$ (VI)
|

in which the radical E has the formula I according to claim 1, m is a number from 2 to 6, n is a number from 1 to 10 and $R^6$ is H or $-CH_3$

4. A polymer according to claim 3, which at the same time contains, in addition to one or more of the structural elements of the formulae II to VI, structural elements of the formula IX

$$-\overset{X_1}{\underset{X_3}{C}}-\overset{X_2}{\underset{X_4}{C}}- \qquad (IX)$$

in which $X_1$ and $X_3$ are each hydrogen, $X_2$ is hydrogen, chlorine or methyl and $X_4$ is hydrogen, methyl, chlorine, -CN, -COOH, phenyl, methylphenyl, methoxyphenyl, cyclohexyl, -COO-alkyl having 1-12 C atoms in the alkyl moiety, -COO-phenyl, $-COOCH_2CH\overset{}{—}CH_2$ (epoxy, bridged by O), -COO-alkyl-OH having 1-3 C atoms in the alkyl moiety, -OCO-alkyl having 1-4 C atoms in the alkyl, -OCO-phenyl, -CO-alkyl having 1-3 C atoms in the alkyl, alkoxy 1-6 C atoms or phenoxy, or $X_1$ and $X_2$ are each hydrogen and $X_3$ and $X_4$ together are the grouping -C(=O)-O-C(=O)- or are each -COOH or -COO-alkyl having 1-6 C atoms in the alkyl.

5. A polymer according to claim 4, which contains structural elements of the formula IX in which $X_1$ and $X_3$ are each hydrogen, $X_2$ is hydrogen or methyl and $X_4$ is $-OCOCH_3$, -COOH or -COO-alkyl having 1-8 C atoms in the alkyl, or in which $X_1$, $X_2$ and $X_3$ are each hydrogen and $X_4$ is -CN, chlorine or phenyl.

6. A polymer according to claim 2, which is a product which is based on novolac as the starting material, has average molecular weights of between 1,000 and 100,000 and contains recurring structural elements of the formula X

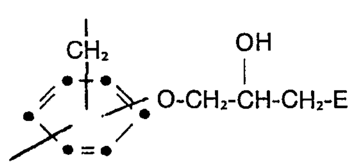

(X)

in which the radical E has the formula I according to claim 1.

7. A polymer according to claim 4, which contains molecule chain members of the formula XVII

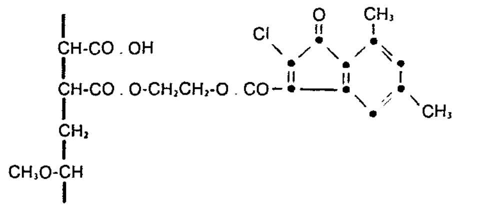

(XVII)

8. A polymer according to claim 4, which contains molecule chain members of the formula XVIII

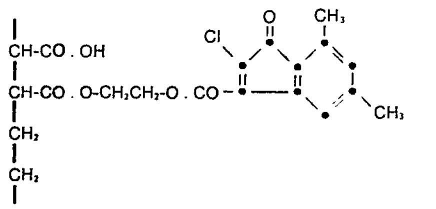

(XVIII)

9. A polymer according to claim 4, which contains molecule chain members of the formula XIX

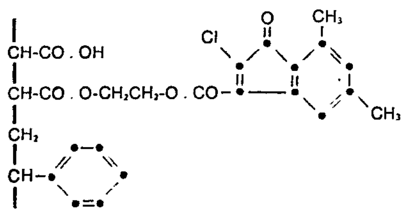

(XIX)

10. A polymer according to claim 3, which contains molecule chain members of the formula XX

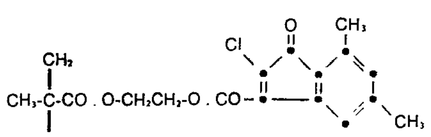

(XX)

11. A polymer according to claim 3, which contains molecule chain members of the formula XXI

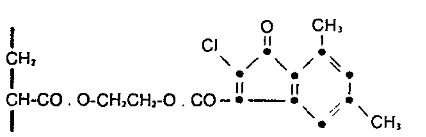

(XXI)

12. The use of a polymer according to claim 1 for crosslinking under the action of light, especially for the production of images.

13. A process for the preparation of a polymer according to claim 1, which comprises reacting a polymer containing free -OH groups, preferably a synthetic resin of the novolac, phenoxy resin or phenol-formaldehyde resin type, with a compound of the formula XI

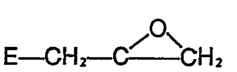

(XI)

in which E is the radical of the formula I.

14. A process for the preparation of a polymer according to claim 1, which comprises reacting a synthetic resin which contains glycidyl groups instead of the free -OH groups and is preferably of the novolac, phenoxy resin or phenol-formaldehyde resin type with a halogenoindenonecarboxylic acid of the formula E-H, in which the radical E has the formula I.

15. A process for the preparation of a polymer according to claim 1 which contains the groups of the formula I in molecule chain members of the formulae II or III according to claim 3, which comprises reacting a homopolymer or a copolymer of maleic anhydride, which polymer contains a substituted or unsubstituted maleic anhydride as a polymerised component, all or some of the anhydride groups being retained, with one of the compounds of the formulae XII and XIII

$E-(CH_2)_m-OH$ (XII)

$E-(CH_2-CH_2-O)_n-CH_2-CH_2-OH$ (XIII)

in which m is a number from 2 to 6 and n is a number from 1 to 10 and in which E is the radical of the formula I.

16. A process for the preparation of a polymer according to claim 1 which contains the groups of the formula I in molecule chain members of the formula II or III according to claim 3, which comprises reacting maleic anhydride, which can be substituted, with one of the compounds of the formulae (XII) or (XIII) according to claim 15 in a first reaction and, in a 2nd reaction, polymerising the particular resulting unsaturated monomer, if desired together with other comonomers containing at least one C=C double bond.

17. A process for the preparation of a polymer according to claim 15 or 16, wherein the reaction is carried out with those compounds of the formula XII which also have the formulae XXII or XXIII

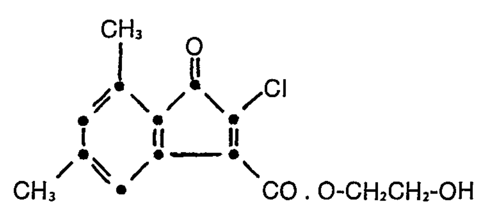

(XXII)

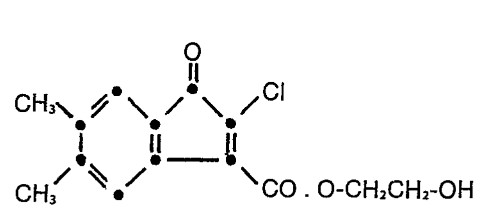

(XXIII)

18. A process for the preparation of a polymer according to claim 1 which contains the groups of the formula I in molecule chain members of the formulae IV to VI according to claim 3, which comprises polymerising one or more of the compounds of the formulae XIV to XVI

$CH_2=C\text{-}CO\,.\,O\text{-}(CH_2)_m\text{-}E$ (XIV)
|
$R^6$

$CH_2=C\text{-}CO\,.\,O\text{-}CH_2\text{-}CH\text{-}CH_2\text{-}E$ (XV)
| |
$R^6$ OH

$CH_2=CH\text{-}O\text{-}CH_2\text{-}CH_2\text{-}E$ (XVI)

in which $R^6$ is H or $CH_3$ an m and E are as defined under formula II according to claim 3, if desired together with further comonomers.

19. A process for the preparation of a polymer according to claim 1 which contains the groups of the formula I in molecule chain members of the formula IV according to claim 3, which comprises subjecting a polyacrylic acid chloride or a polymethacrylic acid chloride, or a corresponding copolymer to a condensation reaction with, in each case, an ester of the formula $E\text{-}(CH_2)_m\text{-}OH$, in which E is the group of the formula I and m is a number from 2 to 6.

20. A process for the preparation of a polymer according to claim 1 which contains the groups of the formula I in molecule chain members of the formula V according to claim 3, which comprises reacting a polyacrylic acid glycidyl ester or a polymethacrylic acid glycidyl ester, or a corresponding copolymer with glycidyl-free monomers, with, in each case, a halogenoindenonecarboxylic acid of the formula E-H, in which E is the group of the formula I.

**Revendications**

1. Polymére réticulable sous l'action de la lumière, qui a un poids moléculaire moyen d'au moins 1000 et que contient des radicaux latéraux répondant à la formule (I):

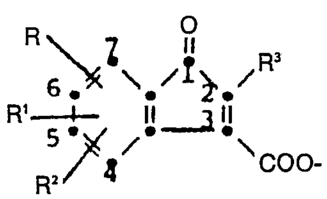

(I)

dans laquelle:

$R^3$ représente Cl ou Br, de préférence Cl, et R, $R^1$ et $R^2$ sont identiques ou différents,

R représente un alkyle normal contenant de 1 à 4 atomes de carbone, de préférence $CH_3$, ou encore H, Cl, Br ou F,

$R^1$ représente un alkyle normal contenant de 1 à 4 atomes de carbone, de préférence $CH_3$, ou encore H,

$R^2$ représente H ou $CH_3$, ou encore

$R^1$ et $R^2$ forment ensemble un radical $\text{-}CH_2CH_2CH_2\text{-}$ avec la condition que, dans ce dernier cas, la liaison au noyau hexagonal se fasse par les atomes de carbone des positions 5 et 6 du noyau,

la proportion de radicaux de formule (I) étant de 5 à 100%, de préférence de 20 à 100%, par rapport au nombre des motifs (éléments structuraux répétés) du polymère considéré.

2. Polymère selon la revendication 1, caractérisé en ce qu'il est un polymère appartenant à l'ensemble constitué par les résines phénol-formaldéhyde, les novolaques, les résines phénoxy et les polymères formés par homopolymérisation ou copolymérisation de monomères contenant des doubles liaisons C=C.

3. Polymère selon la revendication 2, caractérisé en ce qu'il est un homopolymère ou copolymère de monomères contenant des doubles liaisons C=C réactives qui a un poids moléculaire moyen compris entre 30 000 et 1 000 000, et en ce qu'il contient les radicaux de formule (I) dans des maillons de chaînes moléculaires répondant aux formules (II) à (VI):

|
$CH\text{-}CO\,.\,OH$
|
$CH\text{-}CO\,.\,O\text{-}(CH_2)_m\text{-}E$ (II)
|

|
$CH\text{-}CO\,.\,OH$
|
$CH\text{-}CO\,.\,O\text{-}CH_2\text{-}CH_2\text{-}(O\text{-}CH_2\text{-}CH_2)_n\text{-}E$ (III)
|

|
$CH_2$
|
$R^6\text{-}C\text{-}CO\,.\,O\text{-}(CH_2)_m\text{-}E$ (IV)
|

|
$CH_2$ OH
| |
$R^6\text{-}CH\text{-}CO\,.\,O\text{-}CH_2\text{-}CH\text{-}CH_2\text{-}E$ (V)
|

|
$CH_2$
|
$CH\text{-}O\text{-}CH_2\text{-}CH_2\text{-}E$ (VI)
|

dans lesquelles E désigne un radical de formule (I) selon la revendication 1, m désigne un nombre de 2 à 6, n désigne un nombre de 1 à 10 et $R^6$ représente H ou $\text{-}CH_3$.

4. Polymère selon la revendication 3, caractérisé en ce qu'il contient non seulement un ou plusieurs des éléments structuraux de formules (II) à (VI) mais encore, en même temps, des éléments structuraux répondant à la formule (IX):

$X_1$ $X_2$
| |
—C—C—
| |
$X_3$ $X_4$ (IX)

dans laquelle

$X_1$ et $X_3$ représentent chacun l'hydrogène, $X_2$ représente l'hydrogéne, le chlore ou un méthyle, et $X_4$ représente l'hydrogène ou un radical méthyle, chlore, -CN, -COOH, phényle, méthylphényle, méthoxyphényle, cyclohexyle, -COO-alkyl contenant de 1 à 12 atomes de carbone dans la partie alkyle, -COO-phényl, 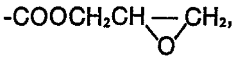, -COO-alkyl-OH contenant de 1 à 3 atomes de carbone dans la partie alkyle, -OCO-alkyl contenant de 1 à 4 atomes de carbone dans la partie alkyle, -OCO-phényl, -CO-alkyl contenant de 1 à 3 atomes de carbone dans la partie alkyle, alcoxy en $C_1$-$C_6$ ou phénoxy, ou

$X_1$ et $X_2$ représentent chacun l'hydrogène et $X_3$ et $X_4$ forment ensemble un groupement 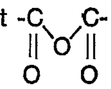 ou représentent chacun -COOH ou un radical -COO-alkyl contenant de 1 à 6 atomes de carbone dans la partie alkyle.

5. Polymère selon la revendication 4 qui contient des éléments structuraux de formule (IX) dans lesquels $X_1$ et $X_3$ représentent chacun l'hydrogène, $X_2$ représente l'hydrogène ou un méthyle et $X_4$ représente $-OCOCH_3$, -COOH ou un radical alcoxycarbonyle contenant de 1 à 8 atomes de carbone dans sa partie alkylique, ou dans lesquels $X_1$, $X_2$ et $X_3$ représentent chacun l'hydrogène et $X_4$ représente -CN, le chlore ou un phényle.

6. Polymère selon la revendication 2, caractérisé en ce qu'il est un produit à base d'une novolaque ayant un poids moléculaire moyen compris entre 1000 et 100 000 et en ce qu'il contient des éléments structuraux répondant à la formule (X):

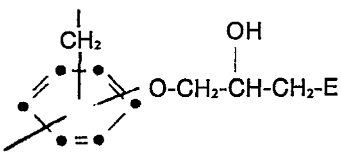

(X)

dans laquelle E représente un radical de formule (I) selon la revendication 1.

7. Polymère selon la revendication 4 caractérisé en ce qu'il contient, dans sa chaîne moléculaire, des maillons de formule (XVII):

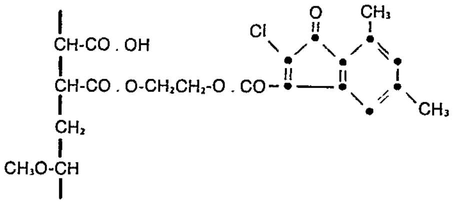

(XVII)

8. Polymère selon la revendication 4, caractérisé en ce qu'il contient, dans sa chaîne moléculaire, des maillons de formule (XVIII):

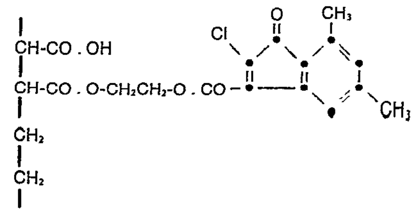

(XVIII)

9. Polymère selon la revendication 4, caractérisé en ce qu'il contient, dans sa chaîne moléculaire, des maillons de formule (XIX):

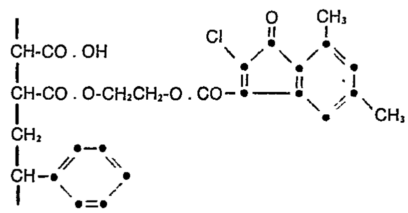

(XIX)

10. Polymère selon la revendication 3, caractérisé en ce qu'il contient, dans sa chaîne moléculaire, des maillons de formule (XX):

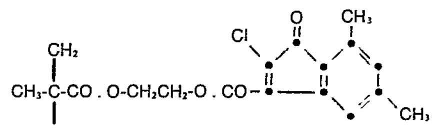

(XX)

11. Polymère selon la revendication 3, caractérisé en ce qu'il contient, dans sa chaîne moléculaire, des maillons de formule (XXI):

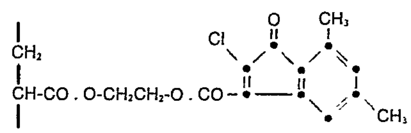

(XXI)

12. Application d'un polymère selon la revendication 1, selon laquelle on effectue une réticulation sous l'action de la lumière, en particulier dans le but de produire des clichés et copies.

13. Procédé de préparation d'un polymère selon la revendication 1, procédé caractérisé en ce qu'on fait réagir un polymère contenant des groupes -OH libres, de préférence une résine synthétique du type des novolaques, des résines phénoxy ou des résines phénol-formaldéhyde, avec un composé répondant à la formule (XI):

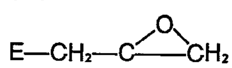

(XI)

dans laquelle E représente un radical de formule (I).

14. Procédé de préparation d'un polymère selon la revendication 1, procédé caractérisé en ce qu'on fait réagir une résine synthétique contenant des radicaux glycidyles au lieu de groupes -OH libres, de préférence du type des novolaques, des résines phénoxy ou des résines phénol-formaldéhyde, avec un acide halogéno-indénone-carboxylique E-H dans lequel E représente un radical de formule (I).

15. Procédé de préparation d'un polymère selon la revendication 1 qui contient les radicaux de formule (I) das des maillons de chaînes moléculares répondant aux formules (II) ou (III) selon la revendication 3, procédé caractérisé en ce qu'on fait réagir un homopolymère ou un copolymère d'anhydride maléique, qui contient un anhydride maléique éventuellement substitué qui à été incorporé par polymérisation, le radical anhydride étant conservé totalement ou partiellement, avec un composé répondant à l'une des formules (XII) et (XIII):

$E\text{-}(CH_2)_m\text{-}OH$ (XII)

$E\text{-}(CH_2\text{-}CH_2\text{-}O)_n\text{-}CH_2\text{-}CH_2\text{-}OH$ (XIII)

dans lesquelles m désigne un nombre de 2 à 6 et n un nombre de 1 à 10 et dans lesquelles E représente un radical de formule (I).

16. Procédé de préparation d'un polymère selon la revendication 1 qui contient les radicaux de formule (I) dans des maillons de chaînes moléculaires répondant aux formules (II) ou (III) selon la revendication 3, procédé caractérisé en ce qu'on fait réagir, dans une première étape, l'anhydride maléique, éventuellement substitué, avec un composé répondant à l'une des formules (XII) et (XIII) selon la revendication 15, et, dans une seconde étape, on polymérise le mnomère insaturé obtenu, éventuellement avec d'autres comonomères contenant au moins une double liaison C=C.

17. Procédé de préparation d'un polymère selon l'une des revendications 15 et 16, caractérisé en ce qu'on effectue la réaction avec des composés de formule (XII) qui répondent également aux formules (XXII) ou (XXIII):

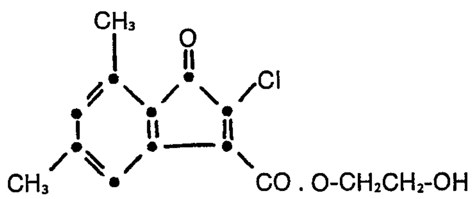

(XXII)

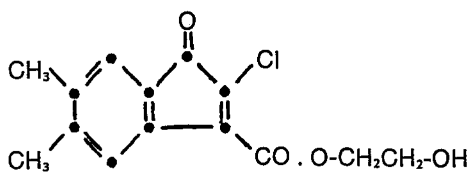

(XXIII)

18. Procédé de préparation d'un polymère selon la revendication 1 qui contient les radicaux de formule (I) dans des maillons de chaînes moléculaires répondant aux formules (IV) à (VI) selon la revendication 4, caractérisé en ce qu'on polymérise un ou plusieurs composés répondant à l'une des formules (XIV) à (XVI):

$CH_2{=}C(R^6)\text{-}CO\,.\,O\text{-}(CH_2)_m\text{-}E$ (XIV)

$CH_2{=}C(R^6)\text{-}CO\,.\,O\text{-}CH_2\text{-}CH(OH)\text{-}CH_2\text{-}E$ (XV)

$CH_2{=}CH\text{-}O\text{-}CH_2\text{-}CH_2\text{-}E$ (XVI)

dans lesquelles $R^6$ représente H ou $CH_3$ tandis que m et E ont les mêmes significations que dans la formule (II) de la revendication 3, éventuellement avec d'autres comonomères.

19. Procédé de préparation d'un polymère selon la revendication 1 qui contient les radicaux de formule (I) dans des maillons de chaînes moléculaires répondant à la formule (IV) selon la revendication 3, procédé caractérisé en ce qu'on condense un poly-(chlorure d'acryloyle) ou un poly-(chlorure de méthacryloyle) ou un copolymère correspondant, avec un ester répondant à la formule $E\text{-}(CH_2)_m\text{-}OH$ dans laquelle E représente un radical de formule (I) et m désigne un nombre de 2 à 6.

20. Procédé de préparation d'un polymère selon la revendication 1 qui contient les radicaux de formule (I) dans des maillons de chaînes moléculaires répondant à la formule (V) selon la revendication 3, procédé caractérisé en ce qu'on fait réagir un poly-(acrylate de glycidyle) ou un poly-(méthacrylate de glycidyle), ou un copolymère correspondant dérivant de monomères sans radical glycidyle, avec un acide halogéno-indénone-carboxylique répondant à la formule E-H dans laquelle E représente un radical de formule (I).